# EUROPEAN PATENT SPECIFICATION

(11) **EP 2 890 535 B1**
(45) Date of publication and mention of the grant of the patent: **27.02.2019**
(21) Application number: 13756961.2
(22) Date of filing: 21.08.2013
(51) Int. Cl.: B28B 3/26, B23P 15/24, B29C 47/00, B29C 47/12, B30B 11/22

(54) **A HONEYCOMB EXTRUSION DIE**
EINE WABENKÖRPER EXTRUSIONSDÜSE
UNE FILIERE D'EXTRUSION POUR UN ELEMENT EN NID D'ABEILLE

(30) Priority: 28.08.2012 US 201213596796
(43) Date of publication of application: 08.07.2015
(73) Proprietor: Corning Incorporated, Corning, New York 14831 (US)
(72) Inventor: BREW, Thomas William, Corning, New York 14830 (US); KREMER, Steven John, Big Flats, New York 14814 (US); MALARKEY, Christopher John, Corning, New York 14830 (US); MILLER, Bryan Michael, Addison, New York 14801 (US)
(74) Representative: Elkington & Fife LLP
(86) International application number: PCT/US2013/055940
(87) International publication number: WO 2014/035752

(56) References cited:
- EP-A1- 1 500 479
- JP-A- S5 638 208
- JP-A- 2006 088 556
- JP-A- 2008 194 847
- US-A- 5 876 804
- US-A1- 2010 301 515

## Description

### CROSS-REFERENCE TO RELATED APPLICATIONS

### FIELD

The present disclosure relates generally to a honeycomb extrusion die.

### BACKGROUND

It is known to manufacture die bodies with a plurality of feed holes and an array of pins that are spaced apart to define a honeycomb network of discharge slots. The die body may be mounted to portions of an extrusion die apparatus to extrude a green body from a batch of ceramic and/or ceramic-forming material. The green body is typically subsequently processed into a ceramic honeycomb substrate that may be used as a particulate filter and/or a catalytic carrier to process exhaust, for example, from a diesel engine.
US 5,876,804 discloses an extrusion die for forming a honeycomb structure comprising slits with metal-plated layers.

US2010/0301515 A1 discloses a die apparatus and methods of making a die body.

JP S56 38208 A discloses a honeycomb extrusion die body according to the preamble of claim 1.

### SUMMARY

In a first aspect, there is provided a honeycomb extrusion die as set out in independent claim 1.

In an embodiment, the width W1 of the upstream slot is narrower than the width of an adjacent feed hole (201a).

### BRIEF DESCRIPTION OF THE DRAWINGS

These and other features, aspects and advantages of the claimed invention are better understood when the following detailed description is read with reference to the accompanying drawings, in which:
**FIG. 1** is a schematic representation of an extrusion apparatus in accordance with aspects of the present disclosure;
**FIG. 2** is an enlarged partial sectional perspective view of portions of a schematically illustrated die body of the extrusion apparatus of **FIG. 1**
**FIG. 3** is an enlarged partial sectional perspective view of the die body of **FIG. 2**;
**FIG. 4** is an enlarged partial sectional view of a die body in accordance with an example of the disclosure, not forming part of the invention; and
**FIG. 5** is a flow chart illustrating example steps of methods of making a die body configured to extrude a honeycomb body.

### DETAILED DESCRIPTION

Aspects of the claimed invention will now be described more fully hereinafter with reference to the accompanying drawings in which example embodiments of the claimed invention are shown. Whenever possible, the same reference numerals are used throughout the drawings to refer to the same or like parts. However, the claimed invention may be embodied in many different forms and should not be construed as limited to the embodiments set forth herein. These example embodiments are provided so that this disclosure will be both thorough and complete, and will fully convey the scope of the claimed invention to those skilled in the art.

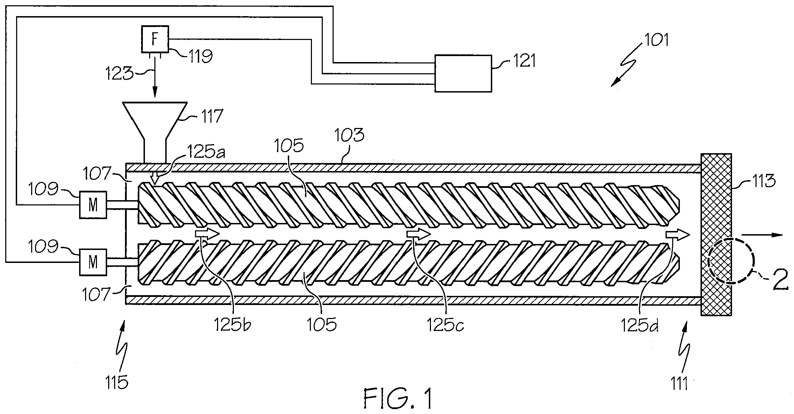

**FIG. 1** provides a schematic representation of an extrusion apparatus **101** for processing a batch of materials. Various batch materials may be provided that comprise ceramic or ceramic forming material. The extrusion apparatus **101** can extrude green bodies of various shapes and sizes. In one example, the extrusion apparatus **101** can be used to extrude a honeycomb body that may be later fired into a honeycomb ceramic body. The honeycomb ceramic body can then be further processed as part of a filter to treat the exhaust stream of an engine. For instance, the honeycomb ceramic body can provide a particulate filter for a diesel or other engine type.

The extrusion apparatus **101** may include a barrel **103** with one or more screws **105** provided therein. In one example embodiment, the barrel **103** can be shaped to provide one or more chambers **107** that each house a screw **105** rotatably mounted within the chambers **107** at a central portion of the barrel **103**. The screws **105** may be powered by one or more driving mechanisms **109** (e.g., motors). On a second, downstream end **111** of the extrusion apparatus **101**, a schematically represented die body **113** is mounted to the barrel **103.** The die body **113** is configured to extrude the batch material in the desired shape, e.g., a honeycomb body. Near an upstream end **115**, a supply port **117** may be provided to allow the batch of materials from a feeder **119** to enter the chamber **107**. As further illustrated, the extrusion apparatus **101** may include a control system **121**. The control system **121** can be configured to adjust rotation of the screws **105** by way of the driving mechanisms **109** and/or adjust the feed rate of the batch material introduced by the feeder **119.**

In operation, batch material may be introduced to the supply port **117** by the feeder **119** as indicated by arrow **123.** As shown by arrow **125a,** the batch material then enters into the barrel **103** and is propagated forward by the rotating screws **105** as shown at **125b, 125c** such that the batch can contact and then enter the die body **113** at **125d.** The rate at which the batch is fed into the supply port **117** (i.e., a feed rate) and/or the rate at which the screws **105** rotate (i.e., a rotational rate or screw speed) can be adjustable at any time during the flow of the batch through the extrusion apparatus **101.**

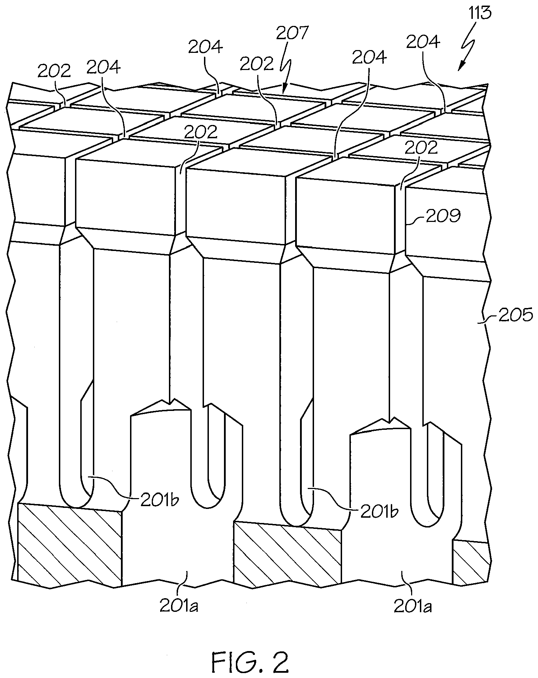

**FIG. 2** illustrates aspects of one example die body **113** of the example extrusion apparatus **101** of **FIG. 1****.** The die body **113** includes a monolithic single piece die body **113** including a plurality of feed holes **201a**, **201b** and an array of die pins **205** integrally formed together and spaced apart to define a honeycomb network **207** of discharge slots **209**. As shown, all of the discharge slots **209** are in direct fluid communication with at least one of the feed holes. For example, as shown in **FIG. 2**, rows of feed holes **201a** can be offset from one another with each feed hole **201a** having an axis extending along slot intersections **202.** Further rows can also include feed holes **201b** that are likewise offset from one another with each feed hole **201b** having an axis extending along slot intersections **204.**

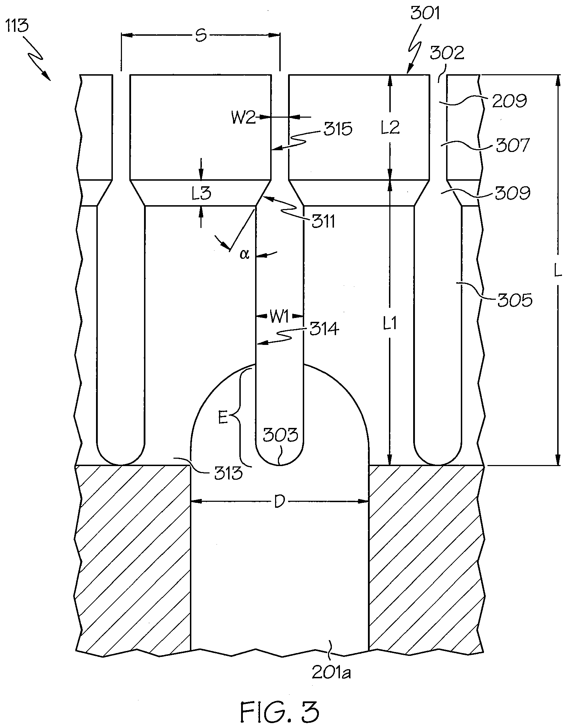

**FIG. 3** illustrates example features of the example die body **113.** The overall slot length **L** (also referred to as "slot length **L**" throughout the disclosure) can be defined between a downstream end **302** in fluid communication with an extrusion face **301** of the die body **113** and an upstream end **303** in fluid communication with at least one feed hole **201a.** As shown, each discharge slot **209** includes an upstream portion **305** including the upstream end **303** and a downstream portion **307** including the downstream end **302.** The upstream portion **305** is in fluid communication with the downstream portion **307** with the upstream portion **305** positioned substantially entirely upstream from the downstream portion **307.**

The overall slot length **L** at least include an upstream length **L1** of the upstream portion **305** of the discharge slot **209** added to a downstream length **L2** of the downstream portion **307** of the discharge slot **209.** As such, the overall length **L** is greater than or equal to about **L1+L2.**

Each discharge slot **209** can also include an optional transition region **309** between the upstream portion **305** and the downstream portion **307** of the discharge slot **209.** The transition region **309,** if provided can include a transition surface **311** extending at an angle α from a surface **314** of the upstream portion **305** to a surface **315** of the downstream portion **307** of the discharge slot **209.** In some examples, 45° ≤ α ≤ 60° although other transition angles may be used in further examples. The transition length **L3** can be significantly less than **L1** or **L2**. In such examples, the overall length **L** can still be greater than or equal to about **L1+L2.** In the illustrated example, the transition length **L3** is considered part of the upstream length **L1** wherein the overall length **L** is about equal to **L1+L2.** With more significant transition lengths, the transition length **L3** may be considered separate from the upstream length **L1** wherein the overall length **L** can be greater than or equal to about **L1+L2+L3.**

The upstream portion **305** includes an upstream width **W1** that is greater than a downstream width **W2** of the downstream portion **307** of the discharge slot **209.** As such, a further shown in **FIG. 3**, **W1** is greater than **W2** (i.e., **W1** > **W2**).

As discussed below, the upstream width **W1** can be optimized, and in one example, even maximized while a root **313** of each die pin **205** includes a section modulus within a predetermined section modulus range. The upstream width **W1** may be within a range of from about 0.2 mm to about 0.5 mm, such as from about 0.3 mm to about 0.4 mm although other upstream widths may be used in further examples.

The downstream width **W2** can be selected to define the final thickness of the intersecting cell walls of honeycomb substrate being extruded from the die body **113** in use. For example, the downstream width **W2** can be within a range of from about 0.04 mm to about 0.20 mm, such as from about 0.05 mm to about 0.15 mm, such as from about 0.06 mm to about 0.14 mm, although other downstream widths may be provided in further examples.

The upstream length **L1** is related to the upstream width **W1**. In particular, the upstream length **L1** is greater than or equal to about 5•**W1**. Likewise, the downstream length **L2** is related to the downstream width **W2.** In particular, the downstream length **L2** is greater than or equal to about 5•**W2**, such as greater than or equal to about 7•**W2**.

In some examples, the overall length **L** can be less than or equal to about 3 mm such as from about 1 mm to about 2.6 mm, such as from about 2 mm to about 2.6 mm, although other lengths can be used in further examples. In some examples the upstream length **L1** can be from about 1 mm to about 2 mm, such as from about 1.4 mm to about 1.7 mm, although various lengths can be used in further examples. In further examples, the downstream length **L2** can be less than about 1.5 mm such as from about 0.4 mm to about 1 mm, although other lengths can be used in further examples.

In some examples, the upstream width **W1** can be less than about 0.5 mm such as from about 0.2 mm to about 0.5 mm, such as from about 0.3 mm to about 0.45 mm, such as from about 0.3 mm to about 0.4 mm although other upstream widths may be used in further examples. In further examples, the downstream width **W2** can be less than 0.3 mm, such less than about 0.2 mm, such as from about 0.06 mm to about 0.14 mm, although further lengths can be used in additional examples.

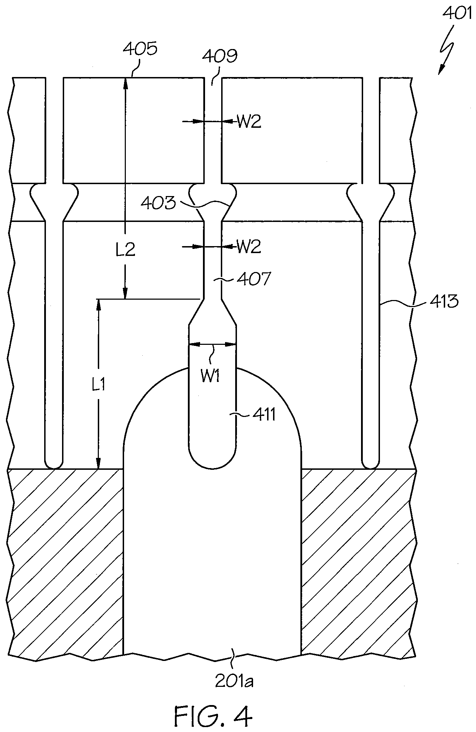

**FIG. 4** illustrates another example die body **401**, not forming part of the invention, including at least one divot **403** that may be provided to surround at least one of the pins **405**. As shown, the divot **403**, if provided, can be located within a downstream portion **407** of a discharge slot **409**. The discharge slot **409** can also include an upstream portion **411** including a width **W1** greater than a width **W2** of the downstream portion **407.** As further shown, the discharge slot **409** with differing widths may be provided only with a selected number of the discharge slots with one or more remaining discharge slots **413** having substantially the same width along the length of the discharge slot outside the divot **403**, if provided. In such designs, reduced manufacturing costs associated with the single width portion can be achieved while still providing a sufficient number slots with an enlarged upstream width **W2** to reduce slot pressure and improve batch spreading.

Methods of making die bodies will now be described with reference to the die body illustrated in **FIG. 3** with the understanding that similar, such as identical methods may be carried out to make the die body illustrated in **FIG. 4** or other die bodies in accordance with aspects of the disclosure. Methods of the present disclosure can manufacture the die body **113** with a plurality of feed holes **201a**, **201b** and an array of die pins **205** that are spaced apart to define the honeycomb network **207** of discharge slots **209** in fluid communication with the feed holes **201a**, **201b.** Each discharge slot **209** is manufactured with a slot length **L.** Each discharge slot **209** is further manufactured with the upstream portion **305** including the upstream slot width **W1** in fluid communication with at least one feed hole **201a**, **201b.** Each discharge slot **209** is still further manufactured with the downstream portion **307** including the downstream slot width **W2** in fluid communication with the extrusion face **301** of the die body **113.** As mentioned previously, the upstream portion **305** and the downstream portion **307** of each discharge slot are manufactured such that **W1** > **W2.**

The method of making the die bodies further includes the step of predetermining the upstream slot width **W1** such that the upstream slot width **W1** is optimized while a root **313** of each die pin includes a section modulus within a predetermined section modulus range. Optimizing the upstream slot width **W1** can provide a sufficiently large section modulus to provide reduced back pressure and enhanced flow characteristics while providing enhanced strength due to an increased section modulus. In one example, although not required in all examples, optimizing the upstream slot width **W1** can maximize the slot width **W1**. Maximizing the upstream slot width **W1** can be beneficial to maximize lateral expansion and maximize reduced pressure of the batch material as it spreads into the discharge slots **209** within the expansion region **E.** Sufficient spreading of batch material within the network of discharge slots can reduce pressure of the batch material while permitting desirable knitting of the walls of the honeycomb substrate being extruded from the extrusion face **301** of the die body **113.** However, while increasing the slot width **W1** can be beneficial to facilitate spreading and reduce pressure of the batch material, the structural integrity of the die pin can be compromised by manufacturing the die body with an excessively wide upstream slot width **W1**. Indeed, increasing the upstream slot width **W1** generally decreases the section modulus at the root **313** of the die pin **205.** As such, it may be beneficial to manufacture the upstream slot width **W1** to a maximum size while maintaining the section modulus of the root **313** of the die pin **205** within a predetermined section modulus range. In further examples, it may be desirable to optimize the slot width **W1**, without necessarily maximizing the slot width, to provide further strength to the die pins while still providing the benefits of an increased size of the upstream slot width **W1**. In one example, the upstream slot width **W1** can be optimized, such as maximized, while the root **313** of the die pin **205** includes a section modulus within a section modulus range of from about 9.3 X 10⁻⁶ cm³ to about 2.8 X 10⁻⁵ cm³. Maintaining the root of the die pin within the section modulus range discussed above can help maintain structural integrity of the die body under various operating conditions. Moreover, cleaning procedures are frequently performed to periodically clean the die body from batch material. Typically, such cleaning procedures can expose the die pins to significant forces applied by pressurized cleaning fluid during the cleaning procedure. Providing the root **313** of the die pin **205** a section modulus within the range of section modulus discussed above can provide the die pins with sufficient rigidity to resist the bending forces that may otherwise cause failure of the die pins at the root **313.**

The method of making the die bodies can further include the step of predetermining the overall length **L** of the discharge slot such that a pin stress is within a predetermined pin stress range. There can be a benefit in maintaining a sufficiently large overall slot length **L** to permit sufficient knitting of the walls of the honeycomb substrate prior to being extruded from the extrusion face **301** of the die body **113.** However, increasing the overall slot length **L** can undesirably increase the operating pressure of the honeycomb extrusion apparatus and can also increase a predetermined pin stress; thereby resulting in potential structural failure of the die pins and increase operating costs. As such, example methods can predetermine the overall length **L** of the discharge slot to minimize the length **L** to reduce pin stress to within a predetermined pin stress range while still providing a sufficiently long overall length **L** to permit appropriate knitting of the walls of the honeycomb structure.

In one example, the predetermined pin stress range can be from about 240 MPa to about 750 MPa. In further examples, the predetermined pin stress range can be based on a calculated pin stress of a reference die body including a reference slot having a substantially constant reference slot width substantially equal to **W2** along an overall length of the reference slot. For example, an existing die body may include a substantially constant width along substantially the entire slot length. In such examples, the existing die body may be analyzed under a slot width substantially equal to the downstream slot width **W2** of the downstream slot portion **307** to determine a pin stress under certain operating or cleaning procedures. Such pin stress may then be used as the predetermined pin stress range to maximize the overall length **L** of the discharge slot **209** in the die body **113.** As such, the overall length **L** of the discharge slot **209** may be minimized while still maintaining similar pin stress used with an existing die body that may have a substantially constant slot width.

In still further examples, the predetermined stress range can be determined based on a calculated pin stress of the die body undergoing a cleaning procedure. For example, an existing design with an acceptable pin design may be modeled to calculate the pin stress of the die body undergoing a cleaning procedure. This predetermined stress can then be used to help determine the maximum length **L** of the discharge slot that may be achieved while maintaining the pin stress within a predetermined pin stress range.

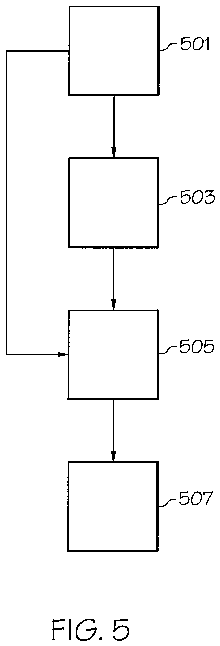

**FIG. 5** represents example steps of manufacturing a die body. The method can include the step **501** of predetermining the upstream slot width **W1** as discussed above. More particularly, the upstream slot width **W1** is predetermined such that the upstream slot width **W1** is optimized, such as maximized, while a root of each die pin includes a section modulus within a predetermined section modulus range, such as from about 9.3 X 10⁻⁶ cm³ to about 2.8 X 10⁻⁵ cm³ although other ranges may be possible in further examples.

The method can then optionally proceed to step **503** of obtaining the predetermined stress range based on a calculated pin stress. In a first example, the predetermined pin stress range of step is based on a calculated pin stress of a reference die body including a reference slot having a substantially constant reference slot width substantially equal to **W2** along an overall length of the reference slot. In a second example, in addition or alternative to the first example, the predetermined stress range is determined based by a calculated pin stress of the die body undergoing a cleaning procedure.

Next, the method can proceed to step **505** of predetermining the slot length **L** such that a pin stress is within a predetermine pin stress range. In some examples, the predetermined stress range is from about 240 MPa to about 750 MPa. In further examples, the method can proceed directly from step **501** of predetermining the upstream slot width **W1** to the step **505** of predetermining the slot length **L.** In further examples, also not illustrated in **FIG. 5**, the method can begin with step **505** and then proceed to optional step **503** or directly to step **501.** In either case, once the upstream slot width **W1** and the slot length **L** are predetermined, the upstream slot width **W1** and the slot length **L**, together with the remaining die body parameters can be used to manufacture the die body during step **507.**

Various manufacturing techniques may be used to manufacture the die body including wired EDM, plunge EDM or an abrasive slitting operation. The die body can be manufactured with the plurality of feed holes **201a, 201b** and the array of die pins **205** that are spaced apart to define the honeycomb network **207** of discharge slots **209** in fluid communication with the feed holes **201a, 201b.** Each discharge slot is manufactured with the predetermined slot length **L.** Each discharge slot is further manufactured with the upstream portion **305** with the upstream slot width **W1** in fluid communication with at least one feed hole **201a, 201b** and the downstream portion **307** with the downstream slot width **W2** in fluid communication with the extrusion face **301** of the die body **113.** The upstream portion **305** and the downstream portion **307** are manufactured such that **W1** > **W2.**

Example methods of making a die body will now be described with respect to the table below in which samples 1 and 4 to 7 are in accordance with the present invention.

**Table 1**

| Sample # | Web Thickness (mm) | L1 (mm) | L2 (mm) | W1 (mm) | W2 (mm) | L (mm) | Section Modulus of Pin Root (cm³) | Handling -Cleaning Pin Stress % Yield |
|---|---|---|---|---|---|---|---|---|
| 1 | 0.114 | 1.52 | 0.800 | 0.305 | 0.114 | 2.44 | 1.52E-05 | 49 |
| 2 | 0.140 | 1.42 | 0.978 | 0.406 | 0.140 | 2.54 | 2.80E-05 | 28 |
| 3 | 0.140 | 1.42 | 0.978 | 0.406 | 0.140 | 2.54 | 2.10E-05 | 38 |
| 4 | 0.114 | 1.65 | 0.800 | 0.330 | 0.114 | 2.57 | 9.70E-06 | 81 |
| 5 | 0.089 | 1.65 | 0.622 | 0.330 | 0.089 | 2.36 | 9.30E-06 | 80 |
| 6 | 0.064 | 1.65 | 0.445 | 0.330 | 0.064 | 2.16 | 1.40E-05 | 47 |
| 7 | 0.089 | 1.65 | 0.622 | 0.330 | 0.089 | 2.36 | 1.30E-05 | 55 |

For each sample, the die body parameters can be modeled to determine the section modulus of the root **313** of the die pin **205** as well as the handling-cleaning pin stress % yield. Initially, as shown in the table, the upstream slot width **W1** can be optimized (e.g., from about 0.3 mm to about 0.4 mm) while the root of the die pin includes a section modulus illustrated in the table that is within a predetermined section modulus range (e.g., from about 9.3 X 10⁻⁶ cm³ to about 2.8 X 10⁻⁵ cm³). Next, the slot length **L** can be minimized (e.g., from about 2.2 mm to about 2.6 mm) to provide sufficient knitting of the walls while reducing a pin stress within a predetermined pin stress range (e.g., with a predetermined pin stress range associated with a Handling-Cleaning Pin Stress % Yield of from about 28 to about 81).

Aspects of the disclosure can provide enhanced knit strength of the cell walls of a substrate that may prevent cracking from occurring subsequent drying and firing processes. Moreover, relatively thin cell walls can be achieved by downstream slot portions with a relatively small downstream width without raising the operating pressure in the slot region of the die body to prohibitively high levels. Indeed, reduced pressures from about 10% to over 30% from standard pressures may be achieved to result in higher throughput capacity; thereby reducing production costs.

By increasing the upstream slot width **W1** relative to the downstream slot width **W2**, spreading of the batch and the spread angle can be more precisely controlled ensuring the unfed intersection areas (i.e., see intersections not labeled **202** or **204** in **FIG. 2**) have comparable strength to the fed intersection zones (see **202, 204**). In addition, this increased upstream slot width (**W1**) allows the overall length **L** of the discharge slot **209** to be reduced, thereby improving manufacturing variability and speeding up the manufacture of the die body **113.** The reduced length **L** of the discharge slot **209** coupled with its increased width decreases the pressure drop in this hole / slot intersection of the expansion zone **E** (see **FIG. 3**) and also in the overall slot zone significantly. In addition, fluid flow modeling confirmed by actual test runs has shown that this wider slot zone can dampen out flow variability that may be introduced to the slot. In some cases, the modeling confirmed by actual test runs showed a 50% flow velocity difference being damped down to under 5%. This type of design is not limited to one expansion and constriction zone. Rather, any number of expansion/constriction zones can be placed in the die design to optimize the aforementioned die design parameters (knit strength, pressure drop and/or flow uniformity). Aspects of the disclosure can improve uniformity of batch flow through the die by as much as 10x which greatly reduces the impact of process/material variability and die tolerance variability.

It will be apparent to those skilled in the art that various modifications and variations can be made to the described embodiments without departing from the scope of the claimed invention. Thus, it is intended that the present claimed invention covers the modifications and variations of the embodiments described herein provided they come within the scope of the appended claims.

## Claims

1. A honeycomb extrusion die comprising:
a monolithic single piece die body (113) comprising an array of pins (205) integrally formed together and spaced apart to define a honeycomb network of discharge slots (209) the die body (113) being provided with a plurality of feed holes (201a), the discharge slots (209) being in direct fluid communication with the feed holes (201a) and comprise an upstream portion (305) in fluid communication with at least one of the feed holes (201a) with a width W1, a downstream portion (307) in fluid communication with an extrusion face with a width W2 which is downstream of the upstream portion, wherein W1 > W2, wherein the discharge slots (209) have a length L, the upstream portion (305) having a length L1 and the downstream portion (307) having a length L2, and wherein L ≥ L1 + L2,
**characterised in that** the length **L1** ≥ 5•**W1**,
and **in that** the length L2 ≥ 5*W2.

2. The honeycomb extrusion die of claim 1, wherein the width W1 of the upstream slot is narrower than the width of an adjacent feed hole (201a).

## Patentansprüche

1. Wabenextrusionsdüse, die umfasst:
einen monolithischen einteiligen Düsenkörper (113), der eine Anordnung von miteinander ganzheitlich ausgebildeten und räumlich getrennten Stiften (205) umfasst, um ein Wabennetzwerk von Austrittsschlitzen (209) zu definieren, wobei der Düsenkörper (113) mit einer Vielzahl von Zufuhrlöchern (201a) bereitgestellt wird, wobei die Austrittsschlitze (209) in direkter Fluidverbindung mit den Zufuhrlöchern (201a) sind und einen vorgelagerten Abschnitt (305) in Fluidverbindung mit mindestens einem der Zufuhrlöcher (201a) mit einer Breite W1, einen nachgelagerten Abschnitt (307) in Fluidverbindung mit einer Extrusionsfläche umfassen, die dem vorgelagerten Abschnitt nachgelagert ist und eine Breite W2 aufweist, wobei W1 > W2 ist, wobei die Austrittsschlitze (209) eine Länge L aufweisen, wobei der vorgelagerte Abschnitt (305) eine Länge L1 aufweist und der nachgelagerte Abschnitt (307) eine Länge L2 aufweist, und wobei L ≥ L1 + L2 ist,
**dadurch gekennzeichnet, dass** die Länge **L1** ≥ 5•**W1** ist
und dass die Länge L2 ≥ 5*W2 ist.

2. Wabenextrusionsdüse nach Anspruch 1, wobei die Breite W1 des vorgelagerten Schlitzes schmaler als die Breite eines benachbarten Zufuhrlochs (201a) ist.

## Revendications

1. Matrice d'extrusion en nid d'abeilles comprenant :
un corps de matrice monobloc monolithique (113) comprenant un ensemble de broches (205) faisant corps ensemble et espacées les unes des autres pour définir une réseau en nid d'abeilles de fentes de décharge (209), le corps de matrice (113) étant doté d'une pluralité de trous d'alimentation (201a), les fentes de décharge (209) étant en communication fluidique directe avec les trous d'alimentation (201a) et comprenant une partie amont (305) en communication fluidique avec au moins l'un des trous d'alimentation (201a) avec une largeur W1, une partie aval (307) en communication fluidique avec une face d'extrusion avec une largeur W2 qui se trouve en aval de la partie amont, où W1 > W2, lesdites fentes de décharge (209) ayant une longueur L, la partie amont (305) ayant une longueur L1 et la partie aval (307) ayant une longueur L2, et où L > L1 + L2,
**caractérisée en ce que** la longueur L1 ≥ 5•W1,
et **en ce que** la longueur L2 ≥ 5*W2.

2. Matrice d'extrusion en nid d'abeilles selon la revendication 1, la largeur W1 de la fente amont étant plus étroite que la largeur d'un trou d'alimentation adjacent (201a).
